Europäisches Patentamt

European Patent Office

Office européen des brevets

(19)

(11) Publication number: **0 388 366**
**A2**

# EUROPEAN PATENT APPLICATION

(21) Application number: **90830049.4**

(22) Date of filing: **09.02.90**

(51) Int. Cl.⁵: **A43B 21/42**

(30) Priority: **10.02.89 IT 4763589**

(43) Date of publication of application:
**19.09.90 Bulletin 90/38**

(84) Designated Contracting States:
**AT BE CH DE ES FR GB GR LI LU NL SE**

(71) Applicant: **BRAMUCCI, Mauro**
**31, Via Roma**
**I-63019 S.Elpidio a Mare (Ascoli Piceno)(IT)**

(72) Inventor: **BRAMUCCI, Mauro**
**31, Via Roma**
**I-63019 S.Elpidio a Mare (Ascoli Piceno)(IT)**

(74) Representative: **Conforti Cioncoloni, Marisa**
**c/o Studio Consulenza Brevetti Via Filippo**
**Turati 76**
**I-00185 Roma(IT)**

(54) **Heel-tap for stiletto heel provided with a metal core doubly coated by thermoplastic resin end process for producing same.**

(57) A heel-tap (12) for stiletto heel (10) of woman shoes comprising: a metal core (21) as a screw-like pin having a countersunk head (23) and a knurled shank (22), this latter being suitable to be inserted by force inside a vertical hole (15) provided in the stiletto heel body in order to reach a solid connection between heel and heel-tap; a first coating (25) of suitably hard thermoplastic resin performed around the core head and solidly connected thereto; a second coating (28) of softer thermoplastic resin solidly connected to the first one and having an anti-slipping function, the perimetrical shape of this second coating being quite suited to the end part of the stiletto heel in its desired shape. The invention relates also to a mass-production of heel-taps in accordance with the type recalled above,in different sizes and shapes,to be mounted on the flat end surface of stiletto heels as required.

## HEEL-TAP FOR STILETTO HEEL PROVIDED WITH A METAL CORE DOUBLY COATED BY THERMOPLASTIC RESIN AND PROCESS FOR PRODUCING SAME

The present invention relates to a heel-tap for stiletto heel pf woman shoes, comprising: a metal core made as a screw-like pin having a counter-sunk cone head and a knurled shank, this latter being suitable to be inserted by force inside a vertical hole provided in the heel body, in order to reach a solid connection between heel and heel-tap; a first coating of suitably hard synthetical resin provided around the core head and solidly connected thereto; a second coating of less hard synthetical resin solidly connected to the first one and having an anti-slipping function, the perimetrical shape of this second coating being quite suited to the end part of the stiletto heel in its desired shape. The invention relates also to a process for mass-production of heel-taps according to the type recalled above, in different sizes and shapes to be applied to the end part ofstiletro heels.

Although since many years the stiletto heel of woman shoe has been indicated as unfit for deambulation purposes and to avoid hyperlordosis, it must be admitted that the fashion does not have excluded up to date the use of stiletto heels also of a remarkable height, particularly for special finalities i.e for theatrical shows and some time for usual deambulation when a slender figure is to be evidenced. The shoe-manufacturers have then turned their attention not only on the stiletto heel by itself but also to a suitable heel-tap, the importance of which relates to the aesthetics eventually suggested by a stylist, as well as to the constructive features referred to the manufacture of same and to the solid connection of the heel-tap to the stiletto heel.

It is well known to the skilled in the art and will generally be understood by any person, that the flat end surface of a stiletto heel has an area very smaller than for slow- or half-heeled shoes, so that an usual connection of the hee-tap to a stiletto heel cannot be carried out, also by means of smallnails. Because of such a rather limited area, the leaning of the human body on the ground could be insecure during the deambulation and a slipping motion could be possible. It is further to add that the stylist may also suggest a small protrusion of the perimetrical shape of the heel-tap, maybe to vary only the colour of such end part of the stiletto heel.

The importance of the heel-tap features must then be kept in mind by the ahoe-manufacturer in order to perform it suitably for shoes provided with stiletto heel. The Applicant has devoted his best attention to this matter, as specified in the following description referred to the accompanying drawings the interpretation of which should not be difficult to the skilled in the art to solve the problem of an efficient production of heel-taps of this type manufactured in accordance with the described and claimed process.

Hereafter some embodiments of the invention are described as preferred examples of heel-taps for stiletto heel, wherein the constructive features, as well as the process for its mass-production do not have a limitative purpose. Changes and/or modifications are then possible and claimed within the ground principles of the invention.

In the accompanying drawings:

Fig.1 is a rear elevation view of a stiletto heel provided with a heel-tap in accordance with the invention;

Fig.2 is a rear elevation view of a stiletto heel provided with a heel-tap according to another preferred embodiment;

Fig.3 is an elevation view of a metal core and a schematically spaced first coating of synthetic resin to be performed for producing the partly-performed work shown in fig.4 as an insert member of the heel-tap according to the invention;

Fig.4 is an elevation view of the metal core after the first coating of fig.3 has been performed through injection molding;

Fig.5 is an elevation view of a partly-manufactured heel-tap of fig.4 and a spaced schematically shown second coating to be performed for producing the final heel-tap of fig.6 according to this first example;

Fig.6 is an elevation view of a heel-tap after the second coating has been performed through injection molding;

Fig.7 is a top view of the heel-tap of fig.6;

Figs. 8 to 12 repeat sequentially above figs.3 to 7 of the first example of heel-tap, but referred to a second embodiment of the invention, the difference concerning substantially only the shape of the first coating around the metal core head;

Figs.13 to 17 repeat substantially above figs.3 to 7 of the first example in their sequence, but referred to a third embodiment of the invention, the difference concerning furthermore the shape of the first coating around the metal core head;

Figs.18 to 22 repeat substantially above figs.3 to 7 of the first example in their sequence, but refer to a fourth embodiment of the invention, the difference concerning again the shape of the first coating of the metal core head;

Fig.23 is a scheamtic top view of a set of partly-manufactured heel-tap pairs according to the process of this invention wherein a mass-production of heel-tap pairs is provided and shown after the first coating has been performed;

Fig.24 is a schematic elevation view of the interconnected heel-tap pairs of fig.23 after the second coating around the metal core heads has been performed.

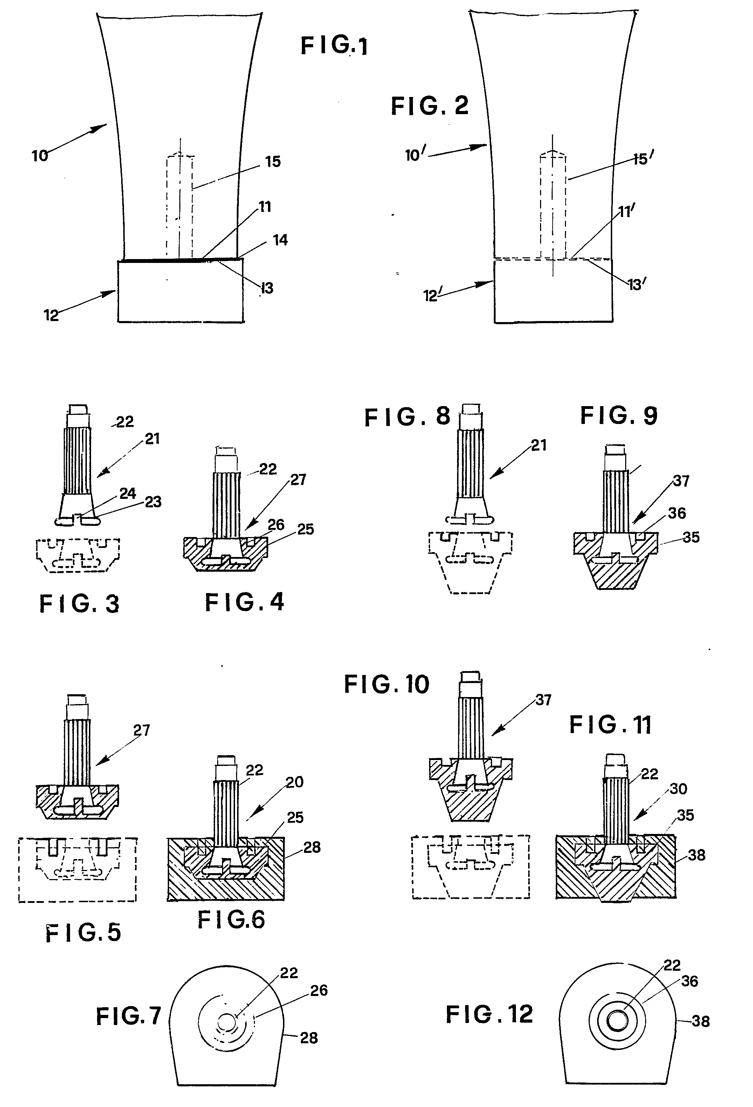

Turning now to the drawings, to which the description is referred, figs. 1 and 2 evidence, first of all, that a heel-tap 12 is preferably connected to a stiletto heel the body of which has its body no-covered by an usual leather-coating, as shown in fig.1, or to a stiletto heel 10' the body of which is to be entirely coated as schematically shown in fig.2. The heel-tap of the former, generally indicated here by the reference numeral 12, has preferably its top surface 13 slightly extended outwards the end surface 11 of stiletto heel 10 so-forming a little perimetrical protrusion 14. The heel-tap 12' of the latter is preferred when the outer surface of the stiletto heel body is to be coated entirely up to the deambukation plain of same, so that the tallying surfaces 13' and 11' are likely shaped and coated.

The ground principles of the invention may be better interpreted by looking through the drawings which illustrate schematically some embodiments of heel-tap for stiletto heel and evidence that the features are substantially like for any described example.

A first example is schematically shown in figs.3 to 7. According to this example, an assembled heel-tape 20 comprises three component members, namely: a metal core 21 made as a screw-like pin having a knurled shank 22 and a counter-sunk cone head 23, this latter being provided with a screw-driver groove 24; a first coating 25 around such head 23,schematically designed in fig.3 and performed through injection molding a partial cross section of which is in figs.4, 5 and 6; a second coating 28 schematically shown in fig.5 and performed so overlapped on the first one that a solid connection therebetween may be carried out successively by vulcanization. The final heel-tap is shown in fig.6 wherein a partial cross section of such second coating 28 is also illustrated.

It will be understood by the skilled in the art that the constructive features of this first example of heel-tap 20 as illustrated schematically aims at reaching following finalities:
- to provide a heel-tap 20 for stiletto heel 10 as a single body comprising a specially shaped metal core 21, the head of which is provided with a first coating to be overlapped by a second coating;
- a forced insertion of the shank 22 of metal core 21 inside a vertical hole 15 appropriately provided in the body of the stiletto heel, so that any angular motion of the inserted heel-tap core is prevented about the hole-axis because of the knurled shape of the shank 22;
- a solid connection of the first coating 25 to the metal core head 23 as it is performed by injection molding extended also along the screw-driver groove 24 of the head;
a first coating of ABS or polyurethanic thermoplastic resin having a suitable compactness and hardness, to be overlapped by
- a second coating of softer polyurethanic resin having an anti-slipping function, a single body of these two coatings being then performed through a vulcanization treatment;
- a flat top surface 13 of the heel-tap 20 is then provited to be solidly fitted together the flat end surface of stiletto heel 10.

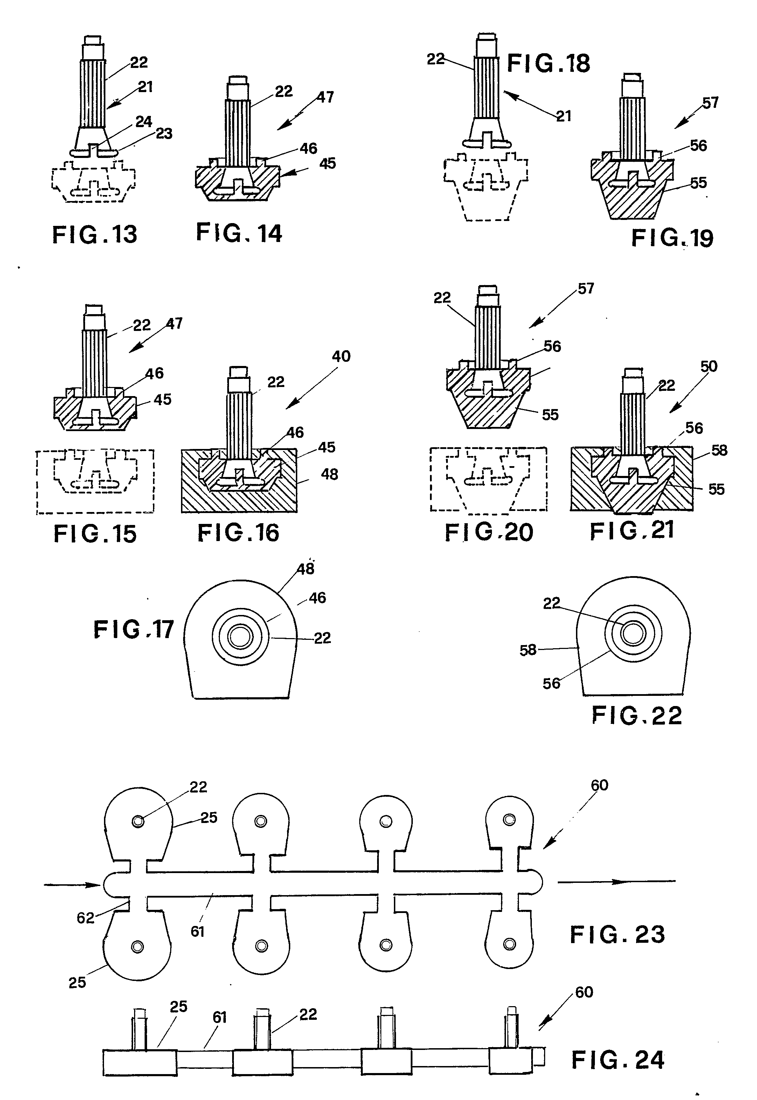

The constructive features of the heel-tap 20 in accordance with the finalities resumed above and illustrated in figs.3 to 7 of the described first example of the invention are substantially confirmed in the other examples, namely:in figs.8 to 12 of the second example; in figs.13 to 17 of the third example and in figs.18 to 22 of the fourth example.

By looking through the drawings it may be seen that these heel-taps, the examples of which are indicated by the reference numerals 20, 30, 40, 50; respectively, are all provided with same type of metal core 21 having a knurled shank 22, and differ from each other on the ground of a different shape of respective first coating 25, 35, 45, 55, performed by direct solid injection molding around the screw-like head of metal core 21. On the outer surface of the first coating the second coating indicated by the reference numerals 28, 38, 48, 58 respectively , is likely performed by the injection molding of a softer thermoplastic resin.

Through the black and white illustrations of the examples it is further possible to note a remarkable difference between the heel-tap 20 of fig.6 and heeltap 30 of fig.11, as well as from the heel-tap 40 of fig.16 and heel-tap 50 of fig.21. The difference already evidenced by looking through these figures pertain substantially to the shape of respective inserts and could obviously be increased by selecting different colours between the first and second coating, the former being compact and hard, while the latter, i.e. the outer coating of the heel-tap, has softer and anti-slipping features, as said above.

In accordance with the present invention, a process is generally provided for mass-production of heel-tap pairs for stiletto heel, through constructive phases carried out sequentially by a single machine driven with lineae motion and suitable intermittances of the pieces to be worked

Figs.23 and 24 of the accompanying drawings show schematically the top and elevation view, respectively, of an assumed set of partly manufactured heel-tap pairs 60 comprising four pairs of heel-taps. In fig.23 such pairs of heel-taps are supposed after the first coating phase; in fig.24 the heel-taps are also provided with respective second coating.

Figs.23 and 24 evidence that in accordance with the exemplified process of the invention a set of metal core pairs must initially be positioned with respective knurled shanks along two parallel plains and then moved in direction of the arrows up to the position wherein a first molding operation is performed to realize a desired first coating 25 around the screw-like head of the metal cores, the linear motion of which will then prosecute to carry out the second coating.

The sequence of operative phases may be resumed as follows in accordance with the invention:

- feed and position metal core pairs along two parallel plains, in order for being coated;
- move the positioned metal core pairs towards a suitable die for injection molding of ABS or polyurethanic thermoplastic resin of selected compactness, hardness and colour around the screwlike heads 23 of metal cores 21 as a suitably shaped first coating of the core heads solidly connected thereto as said above;
- move the insert pairs 25 towards a second die for the injection molding of less hard and anti-slipping thermoplastic resin which overlaps the first one and is solidly connected thereto, the hardness and colour of such second coating being selected as desired;
- vulcanize the overlapped coatings to secure the solid connection therebetween;
- operate mechanically the cutting of single heeltaps in their final shape.

By looking through fig.23, wherein the heeltaps to be manufactured in accordance with this process are shown after the first coating phase, it may easily be understood that dies may be provided to produce pairs of heel-taps of different sizes, to be applied on respective different sizes of stiletto heel end surface.

It may also be of some importance to add that a solid connection between heel and heel-tap is possible as well when the area of the end surface of the heel is relatively large. The connection as described above may, in this case, be possible by using two or more suita-bly sized metal cores of the type described above, rather than a single metal core usually considered sufficient for efficient realizations.

**Claims**

1. Heel-tap for stiletto heel to be solidly counted on the tallying flat end surface of this latter through a screw-like metal core having a knurled shank and a suitably shaped head, the heel-tap being provided with a first coating of thermoplastic synthetic resin around said core head to form a compact, hard insert and a second overlapped softer coating which has an anti-slipping function and defines the outer shape of the heel-tap, **characterized** in that each heel-tap comprises:
- a metal core (21) of the screw-like type, having a cylindrical knurled shank (22) to be inserted by force inside a vertical hole (15) suitably provided in stiletto heel (10) in order for being solidly connected thereto, and a countersunk cone head (23) provided with a conventional screwdriver groove (24):
- a first compact, hard coating (25) of thermoplastic resin performed by injection molding around said core head (23) and solidly connected thereto, this first coating being shaped to form an insert member of heel-tape (20);
+ a second less hard thermoplastic coating (28) performed by injection molding to overlap said insert (25), in order for having an anti-slipping function and defining the outer shape of said heel-tap (20), the solid connection to the first coating being performed by a vulcanization treatment.

2. A heel-tap as claimed in Claim 1 **characterized** in that
- said first coating (25) and said second coating (28) differ from each other according to the respective function, the former being an insert of the heeltap and the latter an overlapped coating which also defines the outer shape of heel-tap (20), the two components being connected as a single body by vulcanization;
- the compactness and hardness features of said two coatings differ from each other in accordance with the function of same, and different colours may also be provided according to the desired look.

3. Process for mass-production of heel-taps (12) for stiletto heels (10) as claimed in Claim 1 wherein the sequence of operative phases to be carried out for manufacturing a predetermined set (60) of heel-tap pairs is **characterized** in that it comprises:
- feeding and automatic disposition of metal core pairs along two parallel vertical plains of the core axses to start the operation in a single machine;
- displacement of said metal core pairs to a first die suitable for injection molding the first coating (25) around the metal core heads by using thermoplastic resin for predetermined compactness and hardness of said first coating;
- displacement of said partly-manufactured work (27) to a second die suitanle for injection molding a second coating (28) of softer thermoplastic resin which overlaps solidly the already performed first one (25);
- vulcanization of the two overlapped coatings (25, 28) to ensure the necessary connection therebetween;

- mechanical cutting operation of the single heel-taps according to the pre-determined shape and size of each one.

4. A process as claimed in Claim 3 **characterized** in that:

- said first coating (25) is provided by using ABS or polyurethanic resin to form a compact and hard insert member for the final heel-tap (20) to be realized after said second coating phase has been carried out;

- said second coating (28) is provided by using a softer polyurethanic resin having an anti-slipping function;

- said first and second coatings (25, 28) of the metal core head have a different shape and may be of fifferent colours.

5. A heel-tap for stiletto heel as claimed in Claims 1 and 3 **charac terized** in that:

- the knurled shape of shank (22) of metal core (21), which is to be forced inside said vertical hole (15) of heel body (10), prevents any angular motion of the heel-tap about the hole-axis;

- the countersunk cone head (23) provided with a screw-driver groove (24) aims to fasten said two coatings (25, 28) to the metal core (21) and form the heel-tap (20) as a single body.

FIG.1

FIG. 2

FIG. 8

FIG. 9

FIG. 3

FIG. 4

FIG. 5

FIG.6

FIG. 10

FIG. 11

FIG.7

FIG. 12

FIG.13

FIG.14

FIG.18

FIG.19

FIG.15

FIG.16

FIG.20

FIG.21

FIG.17

FIG.22

FIG.23

FIG.24